# EUROPÄISCHE PATENTSCHRIFT

(11) **EP 0 870 605 B1**
(45) Veröffentlichungstag und Bekanntmachung des Hinweises auf die Patenterteilung: **31.05.2006**
(21) Anmeldenummer: 98106322.5
(22) Anmeldetag: 07.04.1998
(51) Int. Cl.: B32B 29/06, B32B 23/06, D21H 27/10, B65D 65/40

(54) **Verbundfolie**
Laminated sheet
Feuille stratifiée

(30) Priorität: 10.04.1997 DE 19714993; 23.07.1997 DE 19731675
(43) Veröffentlichungstag der Anmeldung: 14.10.1998
(73) Patentinhaber: Huhtamaki Ronsberg Zweigniederlassung der Huhtamaki Deutschland GmbH & Co. KG., 87671 Ronsberg (DE)
(72) Erfinder: Ströhlein, Karl-Heinz, 91522 Ansbach (DE); Rogg, Hansgünther, 87435 Kempten (DE)
(74) Vertreter: Hutzelmann, Gerhard

(56) Entgegenhaltungen:
- EP-A- 0 397 510
- DE-A- 1 925 091
- DE-A- 1 934 806
- DE-A- 4 445 193
- GB-A- 1 225 624
- US-A- 3 904 806
- US-A- 5 520 970

## Beschreibung

Die Erfindung bezieht sich auf eine Verbundfolie mit einer Tragschicht aus Pergamin, die beidseitig mit einer weiteren Schicht versehen ist, wobei die Pergamin-Tragschicht einerseits eine Barriere-Schicht und andererseits ein Druckbild trägt.

Aus US-A-3,904,806 ist es bekannt, auf eine Pergamin-Bahn eine Kunststoffschicht aufzukaschieren. Dadurch erhält zwar die Pergamin-Bahn einen gewissen Schutz, der aber für viele Einsatzzwecke nicht ausreichend ist.

Der Erfindung liegt die Aufgabe zugrunde, eine Umverpackung für Lebensmittel zu schaffen, die aus Pergamin besteht, das weitgehend durchsichtig ist und die dem Lebensmittel einen ausreichenden Schutz gewährt.

Diese Aufgabe wird erfindungsgemäß dadurch gelöst, daß die Barriere-Schicht als dreischichtiger Film ausgebildet und auf die Pergamin-Tragschicht aufkaschiert oder aufextrudiert ist, wobei die Barriere-Schicht aus PE/EVOH/Ionomer oder Ionomer/EVOH/Ionomer besteht.

Diese Barriere-Schicht verhindert auf sehr gute Weise, daß Fett od.dgl. Bestandteile aus dem Lebensmittel in die Pergaminschicht gelangen und diese eventuell anlösen; das Druckbild ermöglicht darüber hinaus, daß Verbraucherinformationen auf einfache Weise am Lebensmittel angebracht werden können.

Die Barriere-Schicht dient in erster Linie als Sauerstoff- und Wasserdampfbarriere und verhindert darüber hinaus, daß Fett od.dgl. Bestandteile aus dem Lebensmittel in die Pergaminschicht gelangen und diese eventuell anlösen; das Druckbild ermöglicht darüber hinaus, daß Verbraucherinformationen auf einfache Weise am Lebensmittel angebracht werden können. Gleichzeitig wird jedoch das papierartige Aussehen der Pergaminlage weitgehend erhalten und ein angenehmes und sicheres Griffverhalten erzielt. Trotz der Papieroptik ist jedoch eine Dichtigkeit erreicht, welche einer Kunststoffolie entspricht.

Mit der erfindungsgemäßen Ausgestaltung der Ausbildung der Bariereschicht als dreischichtiger Film und deren Aufkaschierung oder Aufextrudierung auf die Pergamin-Lage ist ein besonders einfaches Herstellungsverfahren erzielt, mit dem aber hervorragende Dichtigkeitswerte erreicht werden.

Eine weitere vorteilhafte Ausgestaltung der Erfindung liegt darin, daß das mittels Druckfarben aufgebrachte Druckbild durch eine weitere Lackschicht abgedeckt ist.

Bei einem ersten Ausführungsbeispiel einer Verbundfolie ist auf eine Pergamin-tragschicht ein dreischichtiger Film im Extrusionsverfahren aufgebracht, der folgenden Aufbau aufweist:
PE/EVOH/Ionomer

Auf der gegenüberliegenden Seite der Tragschicht ist ein Druckbild aufgebracht, das durch eine zusätzliche Lackschicht nach außen abgedeckt ist.

Ein zweites Ausführungsbeispiel einer Verbundfolie weist ebenfalls eine Pergamin-Tragschicht mit einem dreischichtigen Barrierefilm auf, wobei der Barrierefilm aufkaschiert wurde. Der Schichtaufbau des Barrierefilms setzt sich zusammen aus:
Ionomer/EVOH/Ionomer.

Bei allen Ausführungsbeispielen ist die zweite Seite der Pergamin-Tragschicht mit einem Druckbild versehen, das durch eine Lackschicht nach außen abgedeckt ist.

## Patentansprüche

1. Verbundfolie mit einer Tragschicht aus Pergamin, die beidseitig mit einer weiteren Schicht versehen ist, wobei die Pergamin-Tragschicht einerseits eine Barriere-Schicht und andererseits ein Druckbild trägt, **dadurch gekennzeichnet, daß** die Barriereschicht als dreischichtiger Film ausgebildet und auf die Pergamin-Tragschicht aufkaschiert oder aufextrudiert ist, wobei die Barriere-Schicht aus PE/EVOH/Ionomer oder Ionomer/EVOH/Ionomer besteht.

2. Verbundfolie nach Anspruch 1, **dadurch gekennzeichnet, daß** das mittels Druckfarben aufgebrachte Druckbild durch eine weitere Lackschicht abgedeckt ist.

## Claims

1. Multilayer material combination with a substrate layer made of glassine, which is provided on both sides with another layer, where the glassine substrate layer has a barrier layer on one side and a print motif on the other, wherein the barrier layer is configured as a three-layer film and is laminated or extruded to the glassine substrate layer, with the barrier layer consisting of PE / EVOH / ionomer or ionomer / EVOH / ionomer.

2. Multilayer material combination according to claim 1, wherein the print motif applied by means of printing inks is covered by a further lacquer layer.

## Revendications

1. Feuille stratifiée avec une couche porteuse en papier cristal qui est munie des deux côtés d'une autre couche, la couche porteuse en papier cristal portant d'une part une couche formant barrière et d'autre part une image d'impression, **caractérisée en ce que** la couche formant barrière est configurée comme film à trois couches et est mise en place par placage ou par extrusion sur la couche porteuse en papier cristal, la couche formant barrière ayant la composition suivante : PE/EVOH/ionomère ou ionomère/EVOH/ionomère.

2. Feuille stratifiée selon la revendication 1, **caractérisée en ce que** l'image d'impression appliquée à l'aide d'encres d'impression est recouverte d'une couche de vernis supplémentaire.
